# EUROPÄISCHE PATENTSCHRIFT

(11) **EP 1 173 729 B1**
(45) Veröffentlichungstag und Bekanntmachung des Hinweises auf die Patenterteilung: **13.08.2003**
(21) Anmeldenummer: 00941874.0
(22) Anmeldetag: 17.04.2000
(51) Int. Cl.: G01D 5/16, G01D 5/14

(54) **WEGMESSVORRICHTUNG**
DISPLACEMENT MEASURING DEVICE
DISPOSITIF DE MESURE DE DEPLACEMENT

(30) Priorität: 17.04.1999 DE 19917464
(43) Veröffentlichungstag der Anmeldung: 23.01.2002
(73) Patentinhaber: ROBERT BOSCH GMBH, 70442 Stuttgart (DE)
(72) Erfinder: REICHL, Asta, D-70499 Stuttgart (DE); KLOTZBUECHER, Thomas, D-70635 Rudersberg (DE)
(86) Internationale Anmeldenummer: DE0001210
(87) Internationale Veröffentlichungsnummer: WO00063651

(56) Entgegenhaltungen:
- EP-A- 0 907 068
- DE-A- 19 738 316

## Beschreibung

### Stand der Technik

Die Erfindung betrifft eine Wegmeßvorrichtung. Aus der DE 29 23 644 C2 ist ein Sensor bekannt, der einen zylinderförmig ausgebildeten, aus ferromagnetischem Material hergestellten Rahmen aufweist. Im Rahmen wird gleitend ein Permanentmagnet bewegt, dessen Bewegung proportional zur Bewegung eines Bauteils ist. Ferner ist in einem Spalt des Rahmens und somit im vom Magneten erzeugten geschlossenen Magnetkreis ein magnetfeldempfindliches Element angeordnet, dessen Ausgangssignal proportional zur Bewegung des Magneten ist. Da der Magnet aber unmittelbar an der Innenseite des Rahmens gleitet, können hohe Reibungsverluste entstehen, die das Ausgangssignal verfälschen. Da das Gehäuse geschlossen ist ergibt sich ein unterschiedlicher Magnetfluß.

Bei der Messeinrichtung nach der Schrift DE-A-19738316 ist der Permanentmagnet mittig unterhalb dem Hallelement in der sogenannten Nullstellung angeordnet. In dieser Stellung ist der Magnet symmetrisch gegenüber dem Hallelement angeordnet, so dass das Hallelement nur unwesentlich vom Magnetfluss durchströmt wird. Es liegt somit keine Spannung an dem Hallelement an. Der sogenannte Nullpunkt liegt somit in der Mitte der Messkurve. Je nach Auslenkung erhält man aufgrund der zwei entgegengesetzt verlaufenden Magnetkreise L1 und L2 eine positive bzw. eine negative Messkurve. Die Stange des Permanentmagneten ist nicht in den Magnetfluss miteinbezogen. Sie dient nur zur Führung bzw. zur Übertragung der Bewegung eines zu überwachenden Bauteils auf den Permanentmagneten. Der Magnetfluss, der vom beweglichen Permanentmagneten erzeugt wird, verläuft somit nur über starr angeordnete Flussleitteile.

### Vorteile der Erfindung

Die erfindungsgemäße Meßvorrichtung mit den Merkmalen des Anspruchs 1 hat demgegenüber den Vorteil, daß der Magnet, indem er auf einem Schlitten befestigt ist, eine Gleitbewegung mit relativ geringen Reibungsverlusten ausführen kann. Der Schlitten kann sowohl durch seine konstruktive Ausgestaltung als auch durch die verwendeten Materialien relativ gleitbar ausgebildet werden. Ferner kann der Schlitten in einfacher Weise in den geschlossenen Magnetkreis des Magneten miteinbezogen werden. Aufgrund der konischen Lagerung des Schlittens ist ein spielfreier Einbau bzw. auch eine spielfreie Bewegung des Magneten möglich. Der Luftspalt wird durch die Kraft des Magneten nicht beeinflußt, sondern während der Meßbewegung konstant gehalten. Dadurch sind Ausgangssignalschwankungen vermeidbar. Die Führung des Lagers und die Anziehungskräfte des Magneten sind entkoppelt. Bei dieser Meßvorrichtung ist keine Offsetspannung erforderlich. Die Meßvorrichtung ist in einfacher Weise in zu messende Systeme integrierbar oder auch als eigenständiger Sensor verwendbar. So ist sein Einsatz z.B. bei Getriebesteuerungen, Messung des Pedalwegs oder des Ventilhubs denkbar.

Durch die in den abhängigen Ansprüchen aufgeführten Maßnahmen sind vorteilhafte Weiterbildungen und Verbesserungen der im Anspruch 1 angegebenen Meßvorrichtung möglich.

### Zeichnung

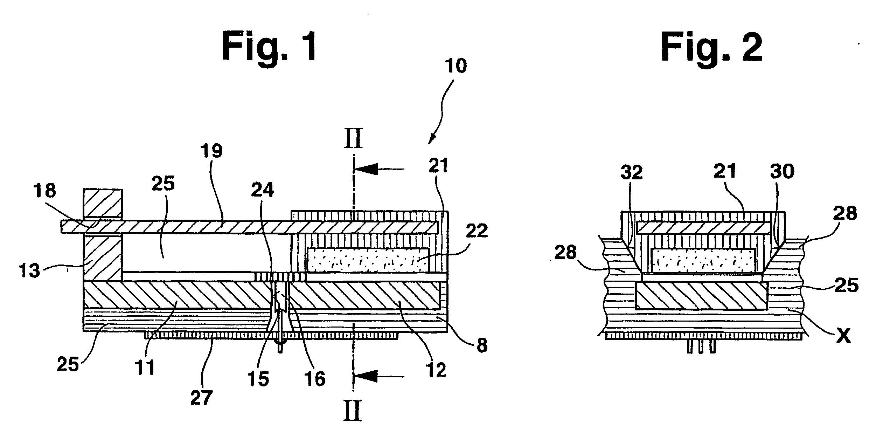

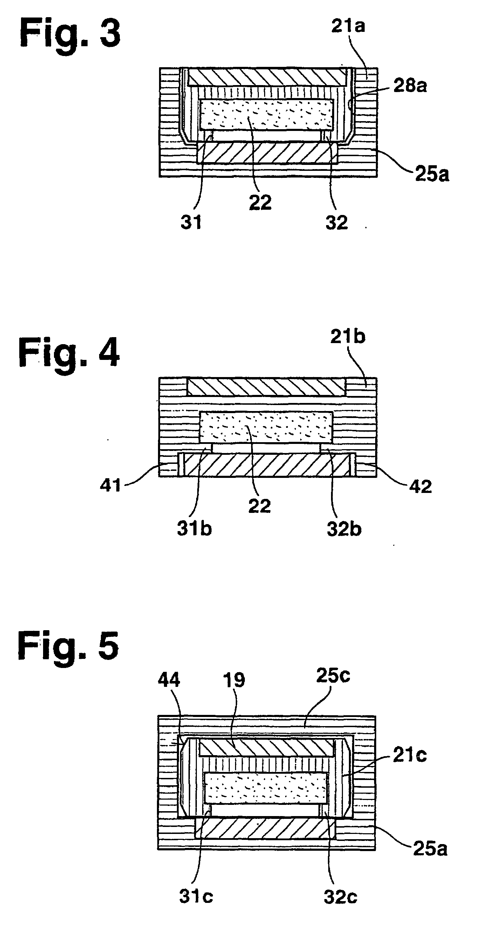

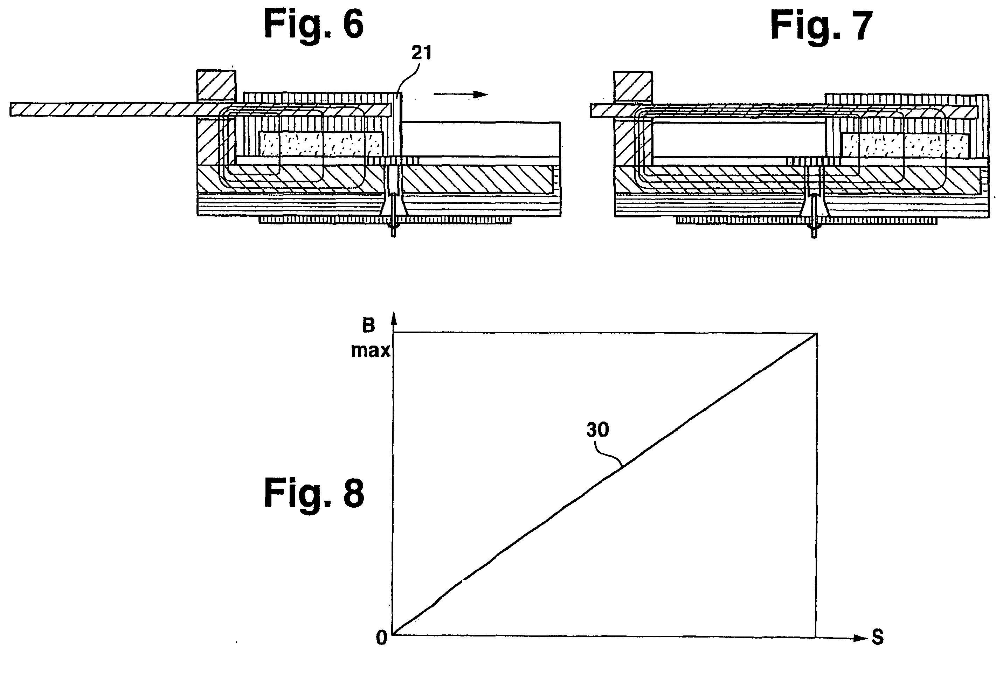

Ausführungsbeispiele der Erfindung sind in der Zeichnung dargestellt und in der nachfolgenden Beschreibung näher erläutert. Die Figuren 1 und 2 zeigen verschiedene Ansichten bzw. Schnitte durch ein erstes Ausführungsbeispiel. Die Figur 1 zeigt hierbei einen Längsschnitt und die Figur 2 einen Schnitt II-II nach Figur 1. Die Figuren 3 bis 5 zeigen Varianten des in der Figur.2 dargestellten Schlittens. Die Figur 6 zeigt den Magnetfluß bei einer Ausgangsstellung bzw. einer Induktion B=0, die Figur 7 den entsprechenden Magnetfluß bei maximaler Auslenkung bzw. bei einer Induktion B=max, und die Figur 8 zeigt den entsprechenden Verlauf der Induktion B über den Weg s.

### Beschreibung der Ausführungsbeispiele

In den Figuren 1 und 2 ist mit 10 eine Meßvorrichtung bezeichnet, die einen aus einer mehrteiligen Grundplatte 11, 12 und einem Seitenteil 13 bestehenden Rahmen aus weichmagnetischem Material aufweist. Die Grundplatte 11, 12 weist einen durchgehenden Schlitz 15 auf, in dem mindestens ein magnetfeldempfindliches Element 16 angeordnet ist. Als magnetfeldempflindliches Element 16 können hier z.B. eine Feldplatte, Magnettransistor, Spulen, magnetoresistive Elemente oder ein Hall-Element verwendet werden. Im Seitenteil 13 ist eine Ausnehmung 18 ausgebildet, durch den eine Trägerplatte 19 aus weichmagnetischem, d.h. magnetisch leitendem Material ragt. Auf dem sich außerhalb des Rahmens befindlichen Ende der Trägerplatte 19 ist direkt oder indirekt ein Bauteil befestigt, dessen Bewegung bzw. dessen Weg bestimmt werden soll. Auf dem in den Rahmen hineinragenden Ende der Trägerplatte 19 ist ein Magnethalter 21 aus magnetisch nicht leitendem Material befestigt. Im Magnethalter 21 ist auf der der Grundplatte 11, 12 des Rahmens zugewandten Seite in einer Ausnehmung ein Permanentmagnet 22 eingesetzt. Die Polarisationsrichtung des Permanentmagneten 22 ist senkrecht zur Trägerplatte 19 bzw. zur Grundplatte 11, 12 angeordnet. Zwischen dem Permanentmagneten 22 und der Grundplatte 11, 12 ist ein Spalt mit magnetisch nicht leitendem Material ausgebildet. Dies kann sich hierbei um einen Luftspalt mit der Größe handeln, oder der Spalt kann mit einem anderen magnetisch nicht leitendem Material ausgefüllt sein. Hierbei kann es z.B. möglich sein, daß der Permanentmagnet 22 vollständig vom Magnethalter 21 umgeben ist. Beim Ausführungsbeispiel nach der Figur 1 ist der Spalt 15, in dem sich das magnetfeldempfindliche Element 16 befindet auf seiner der Trägerplatte 19 zugewandten Seite von einem Deckel 24 abgeschlossen. Der Rahmen, d.h. die Grundplatte 11, 12 und die Seitenwand 13 werden von einem Gehäuse 25 aus magnetisch nicht leitendem Material umgeben. Das Gehäuse 25 ragt bis etwa unterhalb des Schlitzes 18 in der Seitenwand 13 empor. Das Gehäuse 25 weist im Bereich des Schlitzes 15 ebenfalls einen Schlitz auf, durch den die Anschlüsse des magnetfeldempfindlichen Elementes 16 zu einer an der Außenseite des Gehäuses 25 angeordneten Leiterplatte 27 geführt werden können.

Wie aus der Figur 2 ersichtlich ist, dienen die Seitenwände 28 des Gehäuses 25 zur Führung des Magnethalters 21. Hierzu sind in der Figur 2 die der Innenseite des Gehäuses 25 zugewandten Flächen 30 der Seitenwände 28 trapezförmig ausgebildet. Die den Flächen 30 der Seitenwände 28 zugewandten Flächen 32 des Magnethalters 21 sind ebenfalls trapezförmig ausgebildet. Durch diese Ausgestaltung der Führung ist ein relativ reibungsfreies Gleiten des Magnethalters 21 im Gehäuse 25 möglich. Ferner bestimmt diese trapezförmige Ausbildung die Größe des Luftspalts bzw. ermöglicht sie eine Konstanz des Luftspaltes während der Bewegung des Magnethalters 21 im Gehäuse 25.

Der Permanentmagnet 22 ist senkrecht zur Bewegungsachse magnetisiert. Dies bedeutet, je nach Polarisierungsrichtung ergibt sich ein Magnetfluß vom Permanentmagneten 22 durch den Magnethalter 21 zur Trägerplatte 19. Von der Trägerplatte 19 führt der Magnetfluß durch den Spalt 18 und die Seitenwand 13 zum Teil 11 der Grundplatte. Der Magnetfluß verläuft im Teil 11 der Grundplatte über den Spalt 15 und durch das Hallelement 16 hindurch zum Teil 12 der Grundplatte und über den Luftspalt zurück zum Permanentmagneten 22, so daß sich ein geschlossener Magnetkreis ergibt. In den Figuren 6 bis 8 ist nun der Magnetfluß bei einer Ausgangsstellung (Figur 6) und in einer Maximalauslenkung (Figur 7) und der Verlauf der Ausgangsspannung, d.h. der magnetischen Induktion B im magnetfeldempfindlichen Element 16 zwischen den beiden Extremstellungen und über den Weg S dargestellt. In der Figur 6 befindet sich der Magnethalter 21 in der Zeichnung gesehen links, d.h. die Stirnseite des Magnethalters 21 liegt nahezu an der Seitenwand 13 an, aus der auch der Träger 19 herausragt. Wie aus der Figur 6 ersichtlich ist, darf in dieser Ausgangsstellung kein Magnetfluß das magnetfeldempfindliche Element 16 durchfließen. Damit kein Magnetfluß durch das magnetfeldempfindliche Element 16 in dieser Stellung möglich ist, muß der Magnethalter 21 aus nicht magnetischleitendem Material bestehen. Der Magnetfluß ist somit in der Grundstellung vom Magneten 22 durch den Magnethalter 21, dem Träger 19, dem Spalt 18, der Seitenwand 13 und dem Teil 11 der Grundplatte und über den Spalt zurück zum Magneten 22. Da dieser Magnetfluß nicht durch das magnetfeldempfindliche Element 16 verläuft, ergibt sich in dieser Stellung die in der Figur 8 eingezeichnete magnetische Induktion B = 0. Da die Seiten der Meßeinrichtung 10 offen sind, kann kein Magnetfluß vom Träger 19 zu den Teilen 11 und 12 erfolgen. Wird nun das zu messende Bauteil, d.h. der Träger 19 mit dem Magnethalter 21 in der Zeichnung gesehen nach rechts verschoben, nimmt der Magnetfluß, der durch das magnetfeldempfindliche Element 16 verläuft kontinuierlich zu. Dadurch ergibt sich die in der Figur 8 dargestellte lineare Meßlinie 30. Bei maximaler Auslenkung, d.h. wie in Figur 7 dargestellt, bei einer Verschiebung nach rechts, d.h. einer Verschiebung des Magneten 22 über den Spalt 15 und somit dem magnetfeldempfindlichen Element 16 hinaus, ergibt sich die maximale magnetische Induktion B = max. In dieser Stellung verläuft, wie in der Figur 7 ersichtlich, der gesamte magnetische Fluß des Magneten 22 durch das magnetfeldempfindliche Element 16.

In den Figuren 3 bis 5 sind nun verschiedene Ausbildungsformen des Magnethalters dargestellt, die ein möglichst reibungsfreies Gleiten im Gehäuse ermöglichen und gleichzeitig eine Konstanz des Luftspalts gewährleisten. In der Figur 3 hat der Magnethalter 21a senkrecht verlaufende Seitenwände 28a. Mit Fortsätzen 31, 32 umgreift der Magnethalter 21a zumindest teilweise den Magneten 22. Mit den Fortsätzen 31, 32 liegt auch der Magnethalter 21a auf der Grundplatte 11, 12 auf. Die Dicke dieser Fortsätze 31, 32 bestimmt auch die Größe des Luftspalts zwischen dem Magneten 22 und der Grundplatte. Dadurch kann der Luftspalt nicht durch die Anziehungskraft F des Magneten 22 während der Messung gestört, d.h. verfälscht werden. Die Außenseiten des Magnethalters 21a sind im Bereich der Fortsätze 31, 32 abgekantet, um ein möglichst reibungsfreies Gleiten des Magnethalters 21a im Gehäuse 25a bzw. auf der Grundplatte zu ermöglichen. Die Innenwandungen des Gehäuses 25a sind korrespondierend zur Form des Magnethalters 21a ausgebildet.

Die Ausbildung des Magnethalters nach der Figur 4 ermöglicht eine Verwendung bei einem den Magnethalter umgreifenden Gehäuse, wie in den bisherigen Figuren dargestellt und auch eine Verwendung, wenn der Magnethalter nur mit seiner Unterseite auf der Grundplatte oder auf einem Gehäuse aufliegt. Wie in der Ausbildung nach der Figur 3 umgreift der Magnethalter 21b mit zwei Fortsätzen 31b und 32b den Magneten 22. Mit diesen Fortsätzen 31b und 32b liegt der Magnethalter 21b auch auf der Grundplatte auf. Ferner sind am Magnethalter 21b, Schienen 41, 42 ausgebildet, die parallel zur Seitenwand der Grundplatte verlaufen. Die Schienen 41, 42 dienen hierbei als Führung des Magnethalters 21b an der Grundplatte bzw. können sie gleichzeitig oder auch als Alternative als Auflage auf einem sich darunter befindlichen Gehäuse verwendet werden.

In der Figur 5 ist ein Gehäuse 25c dargestellt, das den Magnethalter 21c vollständig umgreift. Hierzu sind, um ein möglichst reibungsfreies Gleiten des Magnethalters 21c im Gehäuse 25c zu ermöglichen auch die oberen Kanten 44, d.h. die sich im Bereich des Trägers 19 befindlichen Außenkanten des Magnethalters 21c abgekantet. Der Magnethalter 21c ist aber, da er auch zumindest teilweise mit den Fortsätzen 31c, 32c auf der Grundplatte aufliegt, auch ohne äußeres Gehäuse verwendbar.

## Patentansprüche

1. Wegmessvorrichtung mit einem Rahmen (11, 12, 13, 19) aus magnetisch leitendem Material und einem innerhalb des Rahmens (11, 12, 13, 19) beweglich angeordneten Magneten (22), einem in einem Schlitz (15) des Rahmens (11, 12, 13, 19) angeordneten magnetfeldabhängigen Sensor (16), der so im geschlossenen Magnetkreis angeordnet ist, dass sich in ihm die Größe des magnetischen Flusses des Magneten (22) in Abhängigkeit von der Lage des Magneten (22) ändert, wobei der Magnet (22) sich in einem Schlitten (21) aus magnetisch nicht leitendem Material befindet und eine Gleitbewegung in einem Gehäuse (25) der Messvorrichtung oder im Rahmen (11, 12, 13, 19) ausführt und wobei der Schlitten (21) über ein Führungsglied (19) das durch eine Ausnehmung in einem Seitenteil des Rahmens (11, 12, 13, 19) ragt, mit dem Bauteil verbunden ist, dessen Bewegung bestimmt werden soll, wobei das Führungsglied (19) aus magnetisch leitendem Material besteht und so angeordnet ist, dass es Teil des den magnetischen Fluss des Magneten leitenden Rahmens (11, 12, 13, 19) ist.

2. Wegmessvorrichtung nach Anspruch 1, wobei das Führungsglied (19) in der Ausnehmung geführt ist.

3. Wegmessvorrichtung nach Anspruch 2, wobei der Rahmen (11, 12, 13, 19) an der dem Seitenteil (13) gegenüberliegenden Seite stirnseitig geöffnet ist.

4. Wegmessvorichtung nach einem der Ansprüche 1 bis 3, wobei sich zwischen dem Magneten (22) und dem Rahmen (11, 12, 13, 19) ein Spalt (L1) aus magnetisch nicht leitendem Material befindet.

5. Wegmessvorrichtung nach einem der Ansprüche 1 bis 3, wobei zwischen Schlitten (21) und Gehäuse (25) eine keilförmige Führung ausgebildet ist.

6. Wegmessvorrichtung nach einem der Ansprüche 1 bis 5, wobei die dem Gehäuse (25) zugewandte Wand (30) des Schlittens (21) schräg ausgebildet ist.

7. Wegmessvorrichtung nach einem der Ansprüche 1 bis 6, wobei der Magnet (22) senkrecht zur Bewegungsrichtung polarisiert ist.

8. Wegmessvorrichtung nach einem der Ansprüche 1 bis 7, wobei der Schlitten (21) Fortsätze (41, 42) aufweist, mit denen er wenigstens teilweise den Rahmen (11, 12, 13, 19) umgreift.

## Claims

1. Displacement measuring device having a frame (11, 12, 13, 19) of magnetically conductive material and a magnet (22) arranged such that it can move within the frame (11, 12, 13, 19), a sensor (16) which is dependent on a magnetic field, is arranged in a slot (15) in the frame (11, 12, 13, 19) and is arranged in the closed magnetic circuit such that the magnitude of the magnetic flux of the magnet (22) changes in it as a function of the position of the magnet (22), the magnet (22) being located in a carriage (21) of magnetically non-conductive material and carrying out a sliding movement in a housing (25) of the measuring device or in the frame (11, 12, 13, 19), and the carriage (21) being connected to the component whose movement is to be determined by means of a guide element (19) which projects through a clearance in a side part of the frame (11, 12, 13, 19), the guide element (19) consisting of magnetically conductive material and being arranged such that it is part of the frame (11, 12, 13, 19) which conducts the magnetic flux of the magnet.

2. Displacement measuring device according to Claim 1, in which the guide element (19) is guided in the clearance.

3. Displacement measuring device according to Claim 2, in which the frame (11, 12, 13, 19) is open at one end, on the side opposite the side part (13).

4. Displacement measuring device according to one of Claims 1 to 3, in which a gap (L1) of magnetically non-conductive material is located between the magnet (22) and the frame (11, 12, 13, 19).

5. Displacement measuring device according to one of Claims 1 to 3, in which a wedge-shaped guide is formed between the carriage (21) and the housing (25).

6. Displacement measuring device according to one of Claims 1 to 5, in which the wall (30) of the carriage (21) which faces the housing (25) is oblique in formation.

7. Displacement measuring device according to one of Claims 1 to 6, in which the magnet (22) is polarized perpendicular to the direction of movement.

8. Displacement measuring device according to one of Claims 1 to 7, in which the carriage (21) has protrusions (41, 42), by means of which it engages at least partially around the frame (11, 12, 13, 19).

## Revendications

1. Dispositif de mesure de déplacement comportant un cadre (11, 12, 13, 19) en une matière conductrice magnétique et un aimant (22) monté mobile dans ce cadre (11, 12, 13, 19), un capteur (16) dépendant du champ magnétique, placé dans une fente (15) du cadre (11, 12, 13, 19), pour être dans un circuit magnétique fermé, et pour que dans celui-ci, l'intensité du flux magnétique de l'aimant (22) change en fonction de la position de l'aimant (22), dans lequel
l'aimant (22) se trouve dans un chariot (21) en une matière non conductrice d'aimantation et exécute un mouvement de glissement dans un boîtier (25) du dispositif de mesure ou dans le cadre (11, 12, 13, 19), et
le chariot (21) est relié par un organe de guidage (19) qui traverse une cavité d'une partie latérale du cadre (11, 12, 13, 19), à la pièce dont on veut déterminer le déplacement,
l'organe de guidage (19) étant en une matière conductrice d'aimantation et installé pour faire partie du cadre (11, 12, 13, 19) conduisant le flux magnétique.

2. Dispositif de mesure de déplacement selon la revendication 1,
dans lequel
l'élément de guidage (19) est guidé dans une cavité.

3. Dispositif de mesure de déplacement selon la revendication 2,
dans lequel
le cadre (11, 12, 13, 19) est ouvert sur le côté frontal à l'opposé de la partie latérale (13).

4. Dispositif de mesure selon l'une des revendications 1 à 3,
dans lequel
entre l'aimant (22) et le cadre (11, 12, 13, 19) il subsiste un intervalle L1) en une matière non conductrice d'aimantation.

5. Dispositif de mesure selon l'une des revendications 1 à 3,
dans lequel
un guide en forme de coin est prévu entre le chariot (21) et le boîtier (25).

6. Dispositif de mesure selon l'une des revendications 1 à 5,
dans lequel
la paroi (30) du chariot (21) tournée vers le boîtier (25) est inclinée.

7. Dispositif de mesure selon l'une des revendications 1 à 6,
dans lequel
l'aimant (22) est polarisé perpendiculairement à la direction de déplacement.

8. Dispositif de mesure selon l'une des revendications 1 à 7,
dans lequel
le chariot (21) comporte des prolongements (41, 42) à l'aide desquels il entoure au moins en partie le cadre (11, 12, 13, 19).
